# EUROPEAN PATENT APPLICATION

(11) **EP 4 625 248 A1**
(43) Date of publication of application: **01.10.2025**
(21) Application number: 24167650.1
(22) Date of filing: 28.03.2024
(51) Int. Cl.: G06N 3/008, G06N 3/0455, G06N 3/08, G06N 3/0475, G06N 5/043, G06N 5/045

(54) **APPARATUS AND METHOD FOR A ROBOT, APPARATUS AND METHOD FOR TRAINING A GENERATIVE MODEL**

(71) Applicant: INTEL Corporation, Santa Clara, CA 95054 (US)
(72) Inventor: DE LA GUARDIA GONZALEZ, Rafael, 48940 Bizcaya, Leioa (MX); CAMPOS MACIAS, Leobardo, 44240 Guadalajara, Jalisco (MX); OBORIL, Fabian, 76139 Karlsruhe (DE); BUERKLE, Cornelius, 76137 Karlsruhe (DE); GOMEZ GUTIERREZ, David, 45600 Tlaquepaque, Jalisco JAL (MX)
(74) Representative: 2SPL Patentanwälte PartG mbB

(57) **Abstract**

Provided is an apparatus for an at least partially autonomous robot, comprising processing circuitry configured to obtain first data indicative of a step of an action to be performed by the robot within a scene, obtain second data indicative of a modification of the scene and generate, by a trained generative model, based on the first data and the second data, third data indicative of a previous or next step of the action within the modified scene.

## Description

### Background

An unsolved problem in human-robot interaction is enabling humans to understand how robots plan and make decisions. Since robots rely on complex decision-making processes to plan and execute actions, a gap can arise in understanding between humans and robots. This can lead to misunderstandings, inefficiencies, and even safety concerns in collaborative settings. Further, incomprehensible behavior of a robot can also be an indication of an error of the robot or its underlying programs.

Conventional approaches to provide explanations provide feedback to humans through predefined visual indicators. While these methods can convey basic information about the robot's actions, they do not sufficiently offer insights into the underlying decision-making processes of the robot.

### Brief description of the Figures

Some examples of apparatuses and/or methods will be described in the following by way of example only, and with reference to the accompanying figures, in which
Fig. 1 illustrates an example of an apparatus for an at least partially autonomous robot;
Fig. 2 illustrates examples of images showing a robot within a scene;
Fig. 3 illustrates an example of an output to a user generated by an apparatus as described herein;
Fig. 4 illustrates an example of a flowchart of a method for storing embeddings into a database;
Fig. 5 illustrates another example of an apparatus for an at least partially autonomous robot;
Fig. 6 illustrates an example of an apparatus for training a generative model;
Fig. 7 illustrates an example of a training dataset used to train a generative model;
Fig. 8 illustrates an example of a method for an at least partially autonomous robot; and
Fig. 9 illustrates an example of a method for training a generative model.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

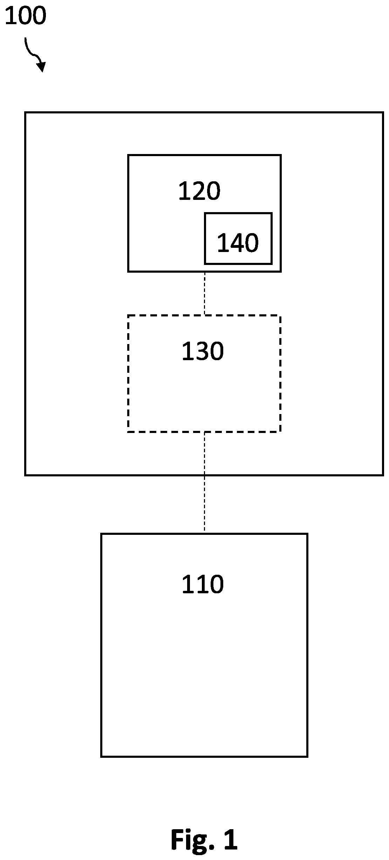

Fig. 1 illustrates an example of an apparatus 100 for an at least partially autonomous robot 110. The apparatus 100 may be for the robot 110 in the sense that it is to be considered in the context of the robot 110. The apparatus 100 comprises processing circuitry 120 and optionally interface circuitry 130.

In case interface circuitry 130 is present, the interface circuitry 130 may be communicatively coupled (e.g., via a wired or wireless connection) to the processing circuitry 120, e.g., for data exchange between the interface circuitry 130 and the processing circuitry 120.

The interface circuitry 130 may be any device or means for communicating or exchanging data. For instance, the interface circuitry 130 may be a set of electronic components, circuits, and/or subsystems for interaction between different interfacing entities such as devices, systems, or components. It may comprise voltage level shifters, buffers, amplifiers, filters, converters, multiplexers, demultiplexers, and/or various other electronic elements.

The interface circuitry 130 may enable a communicative coupling between such interfacing entities. A communicative coupling may refer to the exchange of data or to the establishment of communication channels between two or more entities devices. This coupling can be achieved through wired connections or through wireless technologies like Bluetooth, or cellular networks. It may involve the implementation of communication protocols and standards that facilitate the exchange of information.

The processing circuitry 120 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 120 may optionally be coupled to, e.g., read only memory (ROM) for storing software, random access memory (RAM) and/or non-volatile memory.

The apparatus 100 may be external to the robot 110, as illustrated in Fig. 1. In such cases, the apparatus 110 may be communicatively coupled, e.g. via the interface circuitry 130, to the robot 110 and/or to a device for controlling and/or planning an action to be performed by the robot 110 and/or to a device storing sensor data used to control or plan an action to be performed by the robot. Alternatively, the apparatus 110 may work independently of the robot 110 in which case a communicative coupling may be omitted.

Alternatively, the apparatus 100 may be integrated into the robot 110 or into such a device for controlling/planning the action or storing the sensor data, as described above. In such cases, the interface circuitry 130 may be omitted completely since input data needed for operation of the processing circuitry 120 may be generated internally, by the apparatus 100 itself.

Alternatively, the apparatus 100 may be partially integrated into the robot 110 or into such a device as described above. In such cases, the processing circuitry 120 may comprise several separate processing circuitries and may perform processing operations in a distributed manner.

The robot 110, as referred to herein, is an electromechanical device capable of performing an action (or task). It may comprise mechanical components such as actuators, sensors, and manipulators, controlled by a central processing unit (CPU) or a combination of CPUs and microcontrollers. It is at least partially autonomous in the sense that it may perform an action autonomously or at least semi-autonomously. The robot 110 may be designed to perform an action such as assembly, tidying up, material handling, sorting or alike. The robot 110 may incorporate sensors such as cameras, lidar, radar, or ultrasonic sensors to perceive and interact with their environment. Alternatively, the robot 110 may be controlled by an external entity which is coupled to the sensors.

The processing circuitry 120 is configured to obtain first data indicative of a step of an action to be performed by the robot within a scene. It is to be noted that the action may be already performed or partially performed at the time of obtaining or processing the first data. Alternatively, the action may still be uncompleted at that time.

The scene may specify the context or environment in which the action or step is to be performed. The scene may refer to a particular area, workspace, or scenario where the robot 110 operates. It may include objects, obstacles, landmarks, or other elements that influence the execution of the action or step.

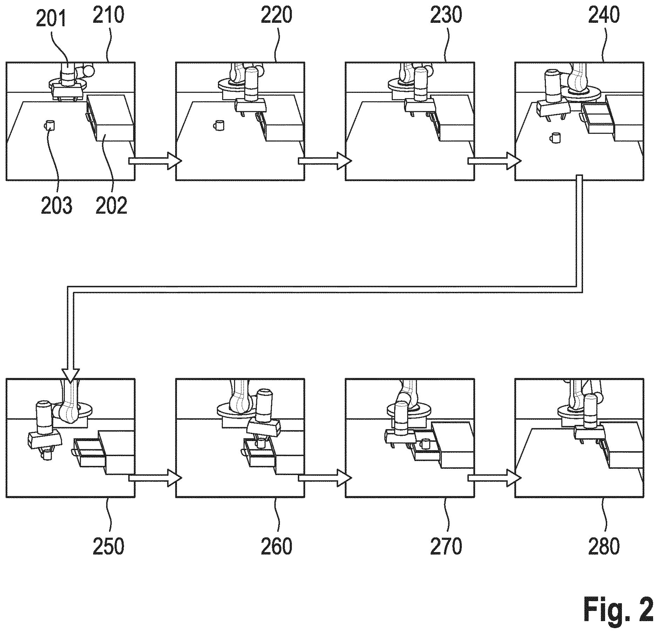

The action to be performed may refer to a task intended for the robot 110. This could involve physical movement, manipulation of objects, interaction with the environment, or any other task within the robot's capabilities. The action may be broken down into multiple steps to be performed by the robot (i.e., the steps may correspond to instructions or commands given to the robot 110). The action may, for instance, comprise a sequence of these multiple steps, i.e., the steps may have a predefined order within the action. The division of the action into the steps may correspond to a predefined granularity and may follow a certain logic, e.g., a step may be a self-contained sub-task within the action. For example, in case of a sorting task, each time the robot 110 is intended to grab a new object, this may be recorded as a new step. An example of a sequence of steps to be performed by a robot is illustrated in Fig. 2.

Fig. 2 illustrates a series of images 210 to 280 showing a robot 201 within a scene. The scene in this example comprises a drawer 202 with which the robot can interact with. The scene further comprises initially (in the images 210 to 270) a mug 203. The action to be performed is cleaning up the mug 203. The series of images 210 to 280 correspond to transitions between steps of the action. In this sense, Fig. 2 is a flow diagram of the task (action) where the progress of the task is demonstrated by "extracted keyframes" (transitions between steps).

The steps may be the outcome of a planning procedure of the action. The steps may, for instance, be described in PDDL (Planning Domain Definition Language). PDDL is a formal language used in robotics for defining planning problems and specifying domains for automated planning systems. In robotics, PDDL planning involves creating a formal representation of a robot's step, environment, goals, and constraints, which can then be used by an automated planner (device for planning) to generate a sequence of steps (or plans) that enable the robot to achieve its objective. For the example of Fig. 2, a simplified plan of the sequence of steps expressed in PDDL may be the following:

| Time | Step | Cost |
|---|---|---|
| 0 | Go to drawer | 2 |
| 1 | Open drawer | 5 |
| 2 | Go to brown mug | 3 |
| 3 | Grab brown mug | 5 |
| 4 | Put brown mug in drawer | 8 |
| 5 | Go to drawer | 2 |
| 6 | Close drawer | 5 |

Image 210 shows the scene at time 0, image 220 the scene at time 1 and so on. Image 210 thus shows the scene when the planned step is "go to drawer 202" as first step of the action "clean up the mug 203". Accordingly, the next step is recorded when "go to drawer 202" is completed - which is shown in image 220. Image 220 shows the scene when the planned step is "open drawer 202" as second step subsequent to the first step. It is to be noted that the step may be described in a more sophisticated manner, e.g., as 6D model of a motion of the robot or alike.

Referring back to Fig. 1, the first data may indicate the step to be performed in any manner, as PDDL or in a different language or form. For instance, the processing circuitry 120 may receive the first data from the above-mentioned planner. The first data may further indicate the scene, e.g., relevant objects of the scene which influence the action. An influence on the action may be present, e.g., if the object is to be interacted with or if the object is an obstacle or alike. For instance, the first data may indicate the type, shape, position (absolute or relative to other objects and/or relative to the robot) of the relevant objects.

The first data (or the scene) may additionally or alternatively comprise information about constraints of the robot 110, e.g., power level, range of motion or alike, or the cost of the step. The cost may refer to the quantitative measure of resources, effort, time, energy, risk or other factors required to execute a step. An example of a specification of costs is given above in the PDDL description of Fig. 2.

In some examples, the first data is image data indicative of an image representing the scene in which the step of the action is shown. This may be an image of a transition between steps such as illustrated by Fig. 2 or an image recording any time between the transitions. The image may be directly used for the following processing by the processing circuitry 120 or may undergo pre-processing, such as image analysis, e.g., to extract the above-mentioned information about the step and scene from an image of the scene. The image data may be a voxel map (volumetric pixel map) which is a three-dimensional grid-based representation of the scene. For instance, each voxel in a voxel map represent a small, discrete volume element in 3D space, analogous to a pixel in a two-dimensional image.

The processing circuitry 120 may receive (e.g., via the interface circuitry 130) the first data from optical sensors of the robot 110, from robot-external sensors surveilling the scene or from a device for storing sensor data of the sensors. Alternatively, the processing circuitry 120 may generate the first data if integrated into such a device or sensor. As an alternative to automatically generated first data, the first data may be an input by a user.

The processing circuitry 120 is further configured to obtain second data indicative of a modification of the scene. For example, the second data may indicate a modification of the type, shape, position of the relevant objects in the scene, it may indicate presence of further objects (e.g., obstacles) which are not present in the scene, the omission of an object in the scene, a modification of the constraints or costs or alike.

The second data may have any data structure. In some examples, the second data may be text data indicative of a textual description of the modification. For instance, the second data may be an input of a user. The user may, e.g., input a modification of interest. Alternatively, the second data may be automatically generated. In the latter case, the modification may be randomly generated, e.g., within a value range of the constraints or position of an object, or picked randomly among possible modifications, e.g., from a plurality of shapes or colors of the relevant object to be modified. The second data may comprise multiple different modifications.

Accordingly, the second data may be received by the processing circuitry 120 (e.g., via the interface circuitry 130), e.g., from a user interface or a device storing user requests of modifications. Or, the second data may be generated by the processing circuitry 120 or by an external device and then received from that device.

The processing circuitry 120 is further configured to generate, by a trained generative model 140, based on the first data and the second data, third data indicative of a previous or next step of the action within the modified scene.

The trained generative model 140 may be a type of trained machine-learning model. It may be a statistical model configured to generate new data samples (third data) that are similar to those in the original dataset (first data). During training, generative models learn the underlying patterns and structure of a dataset and can then generate new data points that are similar to those in the original dataset. The use of a generative model is particularly valuable since the generation of the third data may require modelling complex, high-dimensional data distributions. Building a generative model may include the use of a probabilistic models (e.g., Gaussian mixture models, Hidden Markov Models or Variational Autoencoders), an autoencoder-based model (e.g., denoising autoencoders or generative adversarial networks), a Markov model, a Neural Network-based model (e.g., autoregressive models) or alike.

The modified scene may be a scene different to the scene of the first data, e.g., different in the above-mentioned parameters or potential influences on the action. The difference may however be relatively small, i.e., at least one parameter or influence may be equal in both scenes. The modified scene may be a scene created when the modification (indicated by the second data) is applied to the scene (indicated by the first data). The modified scene may be "counterfactual". For instance, the scene may be a "real scene", an actually observed scene. The modified scene may be counterfactual in a sense that it may be contrary to what actually occurred or exists in the scene. The second data may then indicate a hypothetical (but still realizable) modification of the scene. However, the modified scene may also be a different real scene if the modification is or has been realized in reality.

The processing circuitry 130 may virtually transfer the action or the step into a different scene (the modified scene). The third data in this way may indicate what would happen (what the next step would be) if the scene had been different, i.e., if certain conditions, events etc. had been different from what they actually were. Or, in case the third data indicates the previous step, the third data may indicate which initial circumstances may lead to the modified scene in the next step. Thus, the third data may indicate how a desired outcome may have been accomplished or what a hypothetical outcome would be under modified conditions. In other words, e.g., given a voxelized representation of a scene in which an autonomous robot's action is planned, the apparatus 100 may pose the problem of plan explanation in a counterfactual framework, where the apparatus 100 acts as an explainer generating a new modified scene that results in a different plan, and thereby provide a human understandable explanation for the robot behavior. The generated scene may only differ little or minimally from the original and may be constrained to be feasible in terms of the motions of the robot 110 that would be required and plausible in terms of the workspace characteristics and rules.

The third data may be useful for various applications, e.g., to increase the understandability of a step of the robot 110 for a human, to check or verify the correctness of the planner or the robot 110 or to find ways to improve or correct the planner or the robot 110 or the initial conditions of the scene. For example, if a pick and place action is considered in a scene with a red and a green object among blue objects, and it is assumed that the robot 110 must pick either the red or the green one, it may be of interest to know why the robot 110 in the end chose the red one and not the green one. It could be that the robot 110 did not see it or that the planner determined that it was more expedient in terms of costs to clear the clutter around the red object. Insight may be gained if the robot 110 could tell where the green object would need to be so that it was chosen instead of the red one. Or what changes in the positions of the blue objects would be needed to obtain this decision.

In other scenarios, e.g., multi-agent scenarios with other robots and/or humans, the intermediate steps and trajectories taken by the robot 110 to reach a goal may be of interest. For example, it may be of interest why it slows down at a juncture or why it changes its trajectories given a certain relative position to other agents (robots). By generating counterfactual examples, the interaction between multiple robots or the robot 110 and humans may be optimized, or a user may develop an understanding of the criteria used by the planner as well as of the kinodynamic and perceptual limitations of the robot 110.

Moreover, the apparatus 100 may simplify the generation of alternative scenes since the scenes and the corresponding steps of the robot can be synthesized without being actually realized. This may enable a fast generation of multiple alternative scenes and the resulting steps which can be compared to a desired behavior of the robot 110.

By contrast, conventional tools for robot behavior explanation may be limited to explaining classifiers and thus limited to the same spatial and semantic layout as the query (as the initial scene) and may therefore be unable to provide insights about the importance of the position of objects, which are critical to explain robotics plans. Other conventional tools for post-hoc explanations are simplified, interpretable models and/or visualizations to highlight the factors influencing the decisions made by the planner, without modifying the inputs. In the latter case, information about how to reach a desired outcome can hardly be derived.

The apparatus 100 on the other hand may provide robot plan explanations based on generative artificial intelligence. The underlying method may be agnostic to the planner, requiring only a simple offline calibration with the planner to work. The apparatus 100 may increase the speed of generating robot plan explanations and may work in realistic scenarios, with or without a (graphical) user interface. It may be able to generate counterfactual scenarios considering a specific change (modification) requested by a user. The counterfactual scenario can also be tested with the real planner. The apparatus 100 may be a "counterfactual generator" which may be used to improve the planning procedure.

The third data may indicate the previous or next step of the action within the above-mentioned sequence of steps in which the action can be divided into. The previous or next step may be previous or next relative to the step indicated by the first data. For instance, the previous or next step may be any step to be performed before or after the step indicated by the first data. This could be an immediately preceding or following step, or steps in the sequence may be skipped.

The third data may in some examples indicate a tensor of shape to describe the previous or next step or the resulting modified scene in which the previous step is to be performed or the next step has been performed. The tensor of shape may refer to a data structure to represent multi-dimensional arrays where the shape of the tensor may specify the size of each dimension in the array. The third data may additionally or alternatively indicate a position and/or orientation of the robot 110 or parts thereof (e.g. an arm) in the modified scene. In cases where the third data describes the modified scene for the previous or next step, then the actual previous or next step can be derived from the difference between the scene of the initial step and the resulting modified scene.

All or some of the different structures or contents (versions) of the third data as described above may also be generated simultaneously, e.g., the generative model 140 may have multiple heads such that an image and a cost is output.

The apparatus 100 may optionally output the result to a user. For instance, the interface circuitry 120 may send the result to a display accessible to the user. For the user, it might be preferrable if the result is shown as image of the modified scene. The third data may be image data itself. If not, the processing circuitry 130 may be configured to generate, based on the third data, image data indicative of an image representing the modified scene in which the previous or next step of the action is shown.

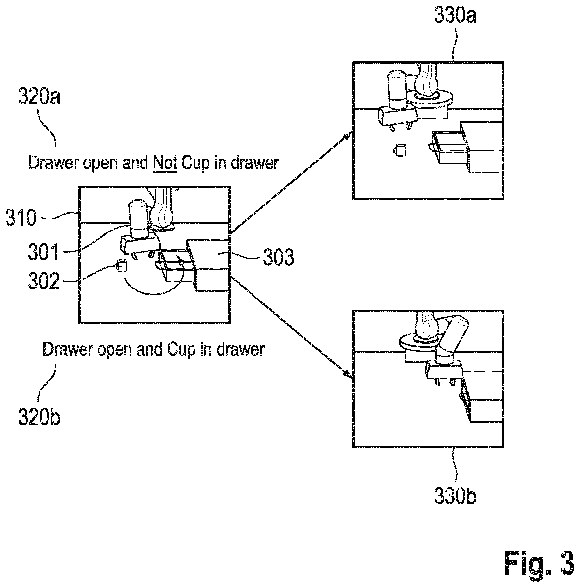

Fig. 3 illustrates an example of an output to a user generated by an apparatus 100 as described herein. Fig. 3 refers to the clean up scenario of Fig. 2. The (initial) scene indicated by first data is shown in image 310. Image 310 shows a robot 301 opening a drawer 303 and a mug 302 outside the drawer 303 on the floor. Image 310 corresponds to the keyframe following execution of the action at time step 1 of the example of Fig. 2.

A textual description of the scene is given by text 320a "drawer open and mug not in the drawer". The action to be performed by the robot 301 may be to clean up and thus in the scene shown in image 310, the robot 301 would be instructed to move to the mug 302 as a next step in order to grab it and put it in the drawer 302 afterwards. The scene after having performed said step is shown in image 330a in which the robot 301 has moved towards the mug 302. This may be the conventional approach in which an image representation of the next (or the previous) step in the task is generated, given a keyframe corresponding to the current step and a text label describing the next (or the previous) keyframe.

The apparatus 100 may by contrast be presented with a keyframe of a task execution with random initial conditions and may be tasked to produce an image showing what the next step would look like. Given the same input image 310 (first data), it may answer a counterfactual query 320b (second data). In the example of Fig. 3, the counterfactual query 320b is a textual description of the scene with a modification, here "drawer open and cup in the drawer", i.e., in this example, the user may want to know what the robot 301 would do next if the current frame was modified by moving the mug into the drawer. This may be done by writing the text query 320b describing the change in the current state of the scene.

The image 330b (third data) may be generated by the apparatus 100. The image 330b shows what the next state would be if the initial state was changed as described in the text 320b: the robot 301 would simply close the drawer 303 to finish the clean up action.

In the following, an example implementation of the generative model 140 is described:
The processing circuitry 120 may be configured to (using the generative model 140) generate at least one first embedding based on the first data and at least one second embedding based on the second data and generate a context vector based on the first embedding and the second embedding. An embedding (or latent or latent variable) may refer to a representation of data, e.g., indicative of words or images, in a continuous vector space. Embeddings may capture semantic relationships and similarities between data in a way that is amenable to computational processing. Word embeddings, for instance, may represent words as dense vectors in a high-dimensional space, where similar words are mapped to nearby points. For instance, words with similar meanings or contexts will have embeddings that are close in the vector space. Word embeddings may be learned from large text corpora. Embeddings may similarly be learned for other types of data, such as images or audio.

For example, the first data and the second data may be separated into graphical and linguistic data (in case they are image and text data, respectively). Each of the two inputs may be encoded into a respective embedding (first and second embedding). For instance, the trained generative model 140 may comprise a trained perceiver model configured to generate the first and/or second embedding. The trained perceiver model may be transformer-based, for instance. A perceiver model is a model designed to perform general perception tasks, such as image classification, object detection, and sequence modeling, by processing inputs of different modalities (e.g., images, audio, text) in a unified manner. The different modalities may be the data structures of the first and the second data. The perceiver model may include iterative attention mechanisms, cross-attention mechanisms, and/or shared weights across modalities. This may help improve generalization and allow the model to handle multimodal inputs effectively. In some examples, the processing circuitry 120 (or the trained generative model 150) is configured to generate the first embedding and the second embedding in parallel.

The context vector may be a vector usually of fixed-length that represents the meaning or context of an input sequence which is used for sequence-to-sequence models or attention mechanisms. The context vector may serve as an initial hidden state of a decoder neural network within the generative model, which generates the output sequence based on this context vector. The decoder network may, for instance, attend to different parts of the input sequence at each step of generation, using attention mechanisms to focus on the relevant parts of the input sequence while generating the output sequence.

The generation of the context vector may involve concatenation of the first embedding with the second embedding or data derived thereof. Concatenation is the process of combining, joining or merging the embeddings to form a single entity. The data derived thereof may for instance be a transformed version of the second embedding or an extracted embedding, as explained in the following.

The processing circuitry 120 may in such cases be configured to (using the generative model 140) transform the second embedding based on a multilayer perceptron (MLP). The processing circuitry 120 may then generate the context vector based on the transformed second embedding. The generative model 140 may comprise the multilayer perceptron. An MLP may be a type of artificial neural network comprising multiple layers of perceptrons (or neurons), with each layer fully connected to the next. It comprises an input layer, one or more hidden layers, and an output layer. Each neuron in an MLP may apply a nonlinear activation function to a weighted sum of its inputs, allowing the network to learn complex mappings between inputs and outputs. Transforming the second embedding may mean applying a series of operations to modify or process its values. This may involve passing the embedding through one or more layers of the MLP, where each layer applies linear transformations followed by nonlinear activation functions.

For improving efficiency of the generation of the context vector, the first embedding may be used to select a well matching embedding from a plurality of predefined embeddings stored in a database. In such cases, the processing circuitry 120 is configured to generate the context vector by extracting at least one embedding from a database having a small distance (e.g., minimum distance or smaller than a threshold) from the second embedding among all predefined embeddings of the database and concatenating the first embedding with the extracted embedding.

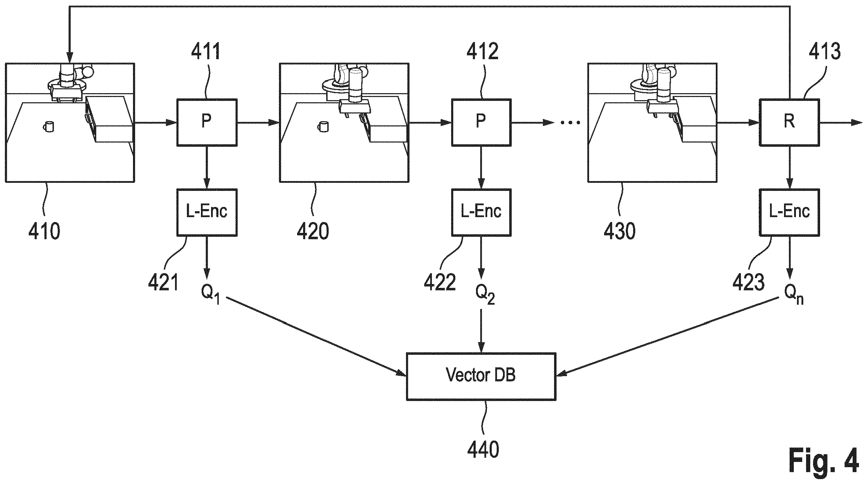

An example of how such a database can be built is illustrated by Fig. 4. Fig. 4 illustrates an example of a flowchart of a method for storing embeddings 421 to 423 into a database 440. This may be done during training, where the embedding vectors output by a language encoder are stored in the (vector) database 440. These vectors may represent the expected post-conditions observed after a planning subtask is completed. Language queries obtained during training may be encoded into these embedding vectors. The query text of the language queries may be extracted from the planner (P-blocks 411, 412) after an input observation 410, 420, 430 is received. Following the last frame, a reset query (R-block 413) may be generated to go back to the starting point.

At inference, the second data (e.g., a user query) gets encoded (yielding the second embedding), and the top-K (best) matching language encodings (embeddings) are extracted from the vector database 440. Each of these matching embeddings may be concatenated with the other input embeddings (first embedding) to create a batch of context vectors. The context vectors may be processed in parallel by the generative model to find the best match for the query.

Referring back to Fig. 1, the first embedding can be generated using a codebook. To transform a textual description (first data) of a condition (scene) into high-dimensional vectors, samples may be randomly generated from a distribution without using a linguistic encoder. This may create a codebook that is associated to the operational domain. A codebook may be created by sampling from a uniform distribution in {-1, 1}×D, where D is the length of the vectors. To generate encodings (first embedding) for a particular scene, the code vectors present may be bundled together using element-wise sum. Alternatively, encodings may be generated on the fly, which scale to realistic scenarios.

The trained generative model 140 may further comprise a trained continuous normalizing flow configured to generate the third data based on the context vector. A continuous normalizing flow is a type of probabilistic model used for generative modeling tasks. It is based on the concept of normalizing flows, which are a class of invertible transformations applied to a simple base distribution (e.g., a Gaussian distribution) to generate complex, high-dimensional distributions. Since the transformation applied to the base distribution is continuous, meaning that it is differentiable with respect to its parameters, the continuous normalizing flow may enable efficient computation of the likelihood and gradients during training, allowing for effective optimization using techniques like gradient descent. The parameters of the transformations (e.g., scale and translation parameters) of the continuous normalizing flow may be learned from, e.g., maximum likelihood estimation or variational inference.

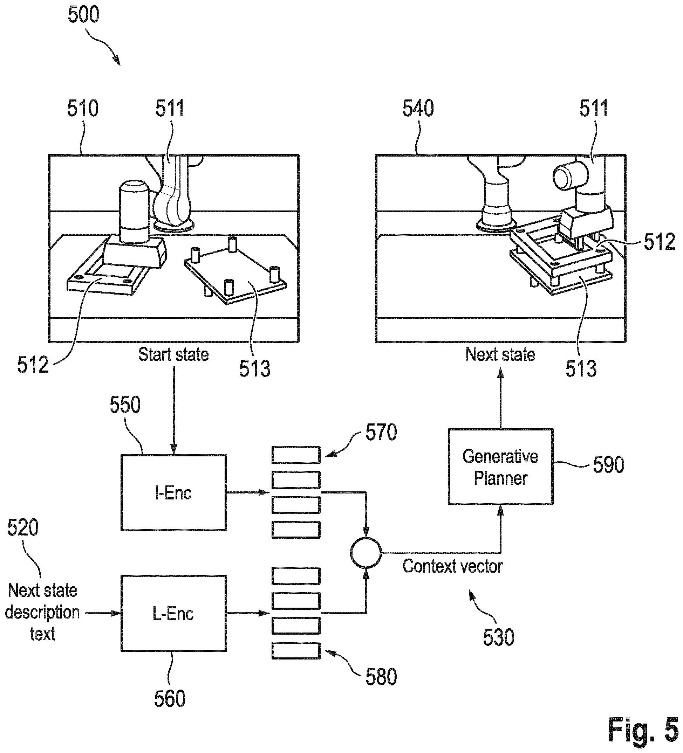

An example of a trained generative model 140 is illustrated by Fig. 5. Fig. 5 illustrates an example of an apparatus 500 (generative plan explaining apparatus) for an at least partially autonomous robot. The apparatus 500 comprises processing circuitry configured to obtain first data 510 indicative of a step of an action to be performed by the robot within a scene. In the example of Fig. 5, the first data 510 is an image of the scene (start state). The processing circuitry is further configured to obtain second data 520 indicative of a modification of the scene. In the example of Fig. 5, the second data 520 is a text description of the modification of the scene for the next step. The processing circuitry is configured to generate, by a trained generative model 530, based on the first data 510 and the second data 520, third data 540 indicative of the next step of the action within the modified scene. In the example of Fig. 5, the third data 540 is an image of the modified scene (next state) in which the next step is performed by the robot.

In the input image 510, a robot arm 511 is shown which is about to grab a frame 512 to be mounted on another component 513. In the output image 540, the robot arm 511 is shown mounting the frame 512 on the other component 513, however, the other component 513 has a slightly modified location relative to the input image 510. This is the modification which was indicated by the second data 520 and applied by the apparatus 500 to the scene of the input image 510.

Fig. 5 also shows an example of a specific implementation of the generative model 530. The inputs 510 and 520 are separated into graphical and linguistic data. Each of the two inputs 510, 520 is encoded by a respective encoder 550, 560. The encoders 550, 560 may comprise a transformer-based perceiver model. The perceiver architecture may solve the quadratic complexity of the self-attention mechanism by employing it on a relatively small set of latent variables, rather than on the inputs 510, 520. The inputs 510, 520 may then only be used for doing cross-attention with the latent variables. In that way, the inputs (e.g., text, graphical data in the form of RGB images, point clouds, etc.) 510, 520 may have less impact on the memory and compute requirements of the self-attention operations.

The I-Enc block is the first input encoder 550. It may take one or more inputs 510 which may consist of images, point clouds, poses, etc., and produce vector embeddings 570. The L-Enc block is the second encoder 560 which encodes the language query 520, producing vector embeddings 580. The vectors 570, 580, after applying optional transformations, are concatenated to form a context vector that conditions the output of a generative planner 590. The output may preferrable be of the same type as the input 510, so that it can be applied directly to a robot planner.

The text latent (embedding 580) produced by the linguistic perceiver encoder 560 may be transformed through an MLP, reshaped and concatenated with the image latent (embedding 570) to form the context vector. This vector is then used to condition the output image generator 590, which may be implement as a continuous normalized flow (CNF) network with U-Net flow model architecture. The specific implementation of the generative model 530 shown in Fig. 5 may be beneficial since the perceiver models 550, 560 and the CNF 590 may be trained separately. For example, the perceiver for images 550 may be pretrained on a JFT dataset. Optionally, the model 550 may be fine-tuned using a robotics dataset. Then, to train the CNF 590, the parameters of the perceiver models 550, 560 may be held fixed. Optionally, the CNF 590 may include multiple heads, for example, to generate a 6D pose of the robot end effector and gripper position.

Depending on how the network 530 is trained, the output 540 of the CNF 590 may be a representation of the next state of the robot and its environment (as shown in Fig. 5). This may be presented to a user to explain what the expected outcome of the plan is before it is executed by the robot. Alternatively, the output 540 may be a representation of the state prior to the current state. By repeatedly calling the model 530, several next and/or previous steps of an action can be generated and, in this way, the whole plan of the action can be regenerated and retraced to answer counterfactual queries.

The apparatus as described herein, such as apparatus 100 or 500, may enable the generation of counterfactuals in a planning domain which closely match the ground truth, starting from random initial conditions unavailable in the training dataset. The apparatus may generate output which is of the same type as the input used by the real planner of the robot (e.g., 2D images). The proposed apparatus may however handle any other input or generate any type of output: Given enough capacity and training for sufficient time, it may be able to handle several sensor modalities and planning tasks. For example, the apparatus can generate a 6D pose of the robot end effector, based on input images.

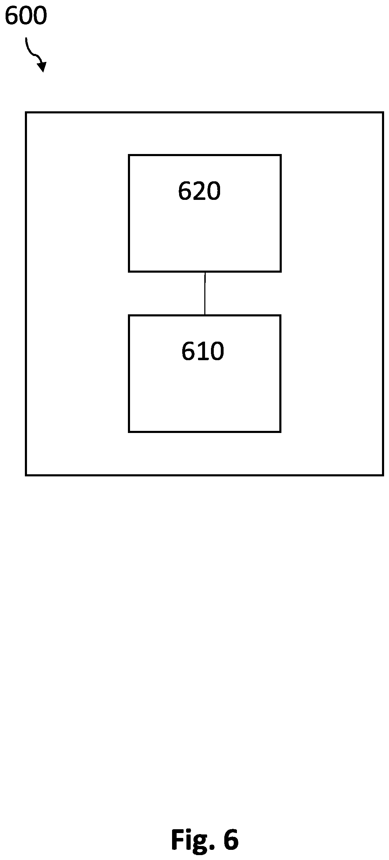

Fig. 6 illustrates an example of an apparatus 600 for training a generative model 610. The apparatus 600 comprises processing circuitry 620 configured to train the generative model 610 based on training data. Training data refers to the dataset used to train the generative model 610, it comprises a collection of input-output pairs, where each output is the target or label corresponding to the respective input, thus, a target or label that the model aims to predict. The training data is used to teach the generative model 610 the underlying patterns and relationships in the training data so that it can make accurate predictions on new, unseen data.

The output may be ground truth. Ground truth refers to the true, correct answer or label associated with each data point in a dataset. It represents the actual value or outcome that the generative model 610 aims to predict. The ground truth serves as the reference or benchmark against which the predictions of the model are evaluated.

The training data comprises first data indicative of a step of an action to be performed by an at least partially autonomous robot within a scene, second data indicative of a modification of the scene and corresponding ground truth data indicative of a previous or next step of the action within the modified scene. Thus, the input is the first and second data being paired with the ground truth data as output.

The processing circuitry 620 is configured to train the generative model to output third data indicative of an estimation of the previous or next step of the action within the modified scene based on the first data and the second data. The processing circuitry 620 may apply any training technique to train the generative model, e.g., supervised, unsupervised, semi-supervised, reinforcement learning, maximum likelihood estimation, adversarial training, variational inference, expectation-maximization or alike.

In cases where the generative model 610 comprises a perceiver model, the processing circuitry 620 may be configured to train the perceiver model to generate a first embedding based on the first data and/or a second embedding based on the second data.

In cases where the generative model 610 comprises a continuous normalizing flow, the processing circuitry 620 may be configured to train the continuous normalizing flow to generate the third data based on the first data and the second data.

The processing circuitry 620 may be configured to separately train the perceiver model and the continuous normalizing flow.

The second embedding may be a text latent which encodes the postconditions that must be satisfied by the planner. This may be trained from PDDL descriptions extracted from the planner, or from textual descriptions from an annotated robotics dataset. The latter approach allows construction of encoding vectors from high-dimensional categorical data without using a perceiver module. As an example, for the PDDL plan of the mug cleanup task described above, the pre- and post-conditions of the step at time 1 are as follows:
Step: Open drawer
Pre-conditions: Drawer is closed, Mug is not in the drawer, Robot is not holding the cup, Robot is at drawer
Post-conditions: Drawer is open, Mug is not in the drawer, Robot is not holding the cup, Robot is at drawer

One way to transform each of these conditions into high-dimensional vectors, without using a linguistic encoder, is to randomly generate samples from a distribution. This creates a codebook that is associated to the operational domain. Alternatively, the encodings may be generated on the fly.

To learn to produce counterfactuals, the generative model 610 may be trained with the observations at the start of a planning step, before the action is applied and a perturbed (modified) set of pre- or post-conditions. For the example in Figure 3, the pre-conditions to the action "open drawer" may be perturbed as follows:
Original Pre-conditions: Drawer is closed, Mug is not in the drawer, Robot is not holding the cup, Robot is at drawer
Perturbed Pre-conditions: Drawer is closed, Mug is in the drawer, Robot is not holding the cup, Robot is at drawer

As observed in the PDDL plan, this corresponds to the post-conditions following the step at time step 6. These post-conditions are encoded, e.g., using random codes or using the linguistic encoder, and the ground truth is obtained from the corresponding observations in the demonstration.

In a specific implementation, the proposed model 610 can be realized in pytorch, and trained with a dataset derived from the core and object datasets from MimicGen. The original tasks are decomposed into key frames, which represent transitions in the steps performed by the robot in each task. A script is created to identify the transitions, which correspond to moments where the robot speed was close to zero, separated by intervals where the robot moved a minimum certain distance. The script also generates a label for each frame, corresponding to the Boolean post-conditions mentioned above, e.g., cup is in the drawer, the drawer is closed, the robot is holding the cup and so forth. To generate image embeddings, pre-trained perceiver models are used. The embeddings correspond to the last hidden layer from the perceiver, which correspond to tensors of shape (batch_size, 512, 1024). The embeddings are concatenated with the code vector corresponding to the counterfactual query, transformed by an MLP and reshaped into tensors of shape (batch_size, 512, 64, 64). The latter is generated during training by taking the bundled code vector corresponding to the label of the end key frame. At inference time, one or more vectors are randomly bundled or separated from the codewords, to match the condition that the user is interested in. The complete model is trained to output tensors of shape (batch_size, 3, 64, 64), which are to be close to the start frame images of the ground truth.

Further details of the apparatus 600 are explained above with reference to Figs. 1 to 5. In particular, after completion of the training, the trained generative model 610 can be used for an apparatus for an at least partially autonomous robot, as described herein.

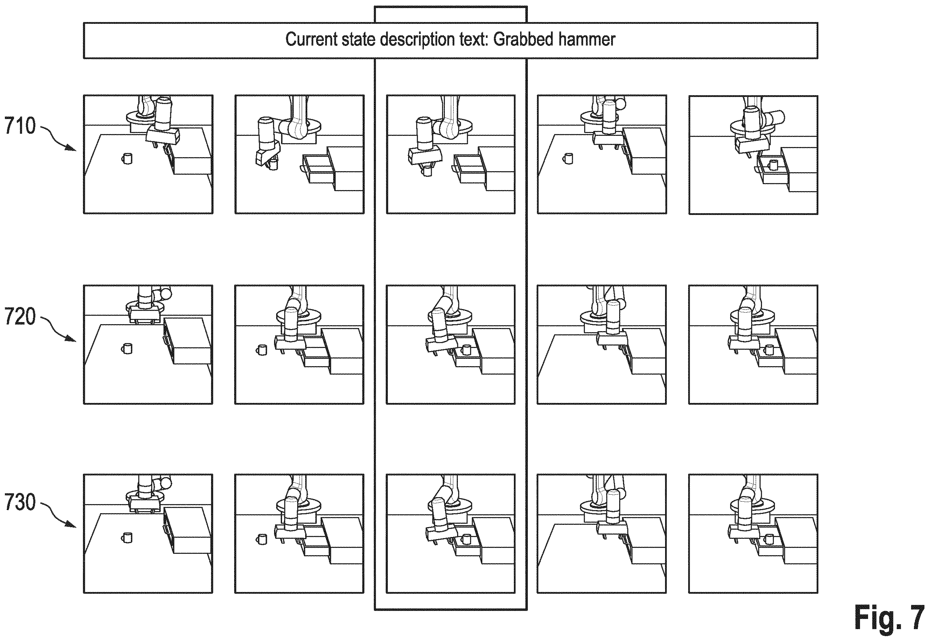

Fig. 7 illustrates an example of a training dataset used to train a generative model as described herein. The training dataset comprises an end configuration 710 of a scene. The end configuration 710 is illustrated in Fig. 7 in form of a series of images showing a step to be performed by a robot within the scene. Each of the images 710 shows a certain step of an action in the scene relative to a step in the scene shown in the start configuration 720. The end configuration 710 has been generated using random observations from the validation set. The generative model was trained in the cleanup object task, with two types of objects, a mug and a hammer. The dataset includes variations in the initial position of the objects and the orientation of the drawer. It contains approximately 20.000 images, and the model was trained for 100 epochs. The start configuration 720 is collected from ground truth. The banner text represents the post-condition corresponding to the end configuration 710. The generative model is trained to generate a counterfactual start configuration 730 (representing the previous step in a modified scene relative to the end configuration 710) based on the end configuration 710 (first data) and a counterfactual query (second data).

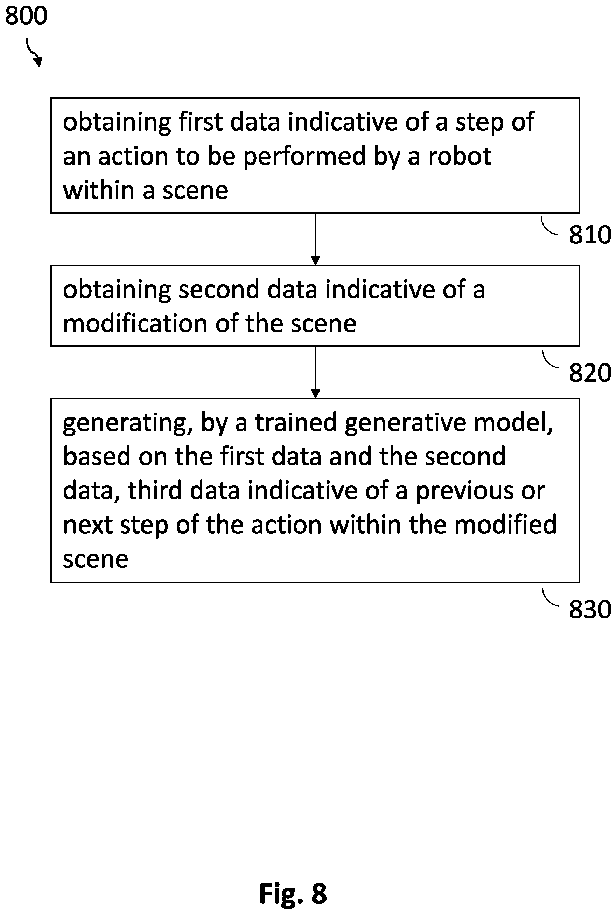

Fig. 8 illustrates an example of an (e.g., computer-implemented) method 800 for an at least partially autonomous robot. The method 800 comprises obtaining 810 first data indicative of a step of an action to be performed by the robot within a scene, obtaining 820 second data indicative of a modification of the scene and generating 830, by a trained generative model, based on the first data and the second data, third data indicative of a previous or next step of the action within the modified scene.

Further details of the method 800 are explained with reference to the apparatus described above, e.g., the apparatus 100 and 500.

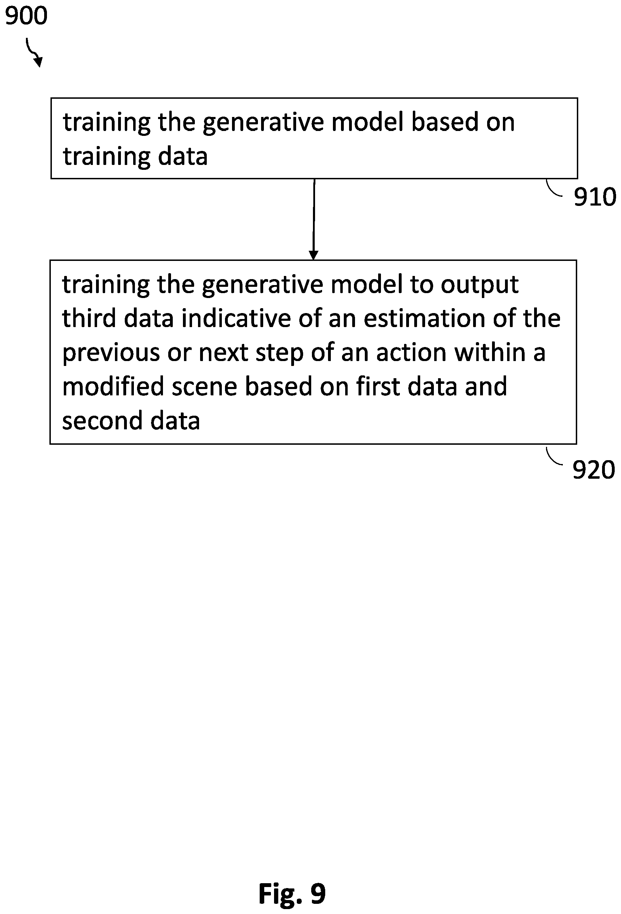

Fig. 9 illustrates an example of an (e.g., computer-implemented) method 900 for training a generative model. The method 900 comprises training 910 the generative model based on training data. The training data comprises first data indicative of a step of an action to be performed by an at least partially autonomous robot within a scene, second data indicative of a modification of the scene and corresponding ground truth data indicative of a previous or next step of the action within the modified scene. The generative model is trained 920 to output third data indicative of an estimation of the previous or next step of the action within the modified scene based on the first data and the second data.

The method 900 may comprise triggering an execution of the action by the robot within the modified scene and obtaining the ground truth data and the second data from the execution of the action within the modified scene. The ground truth data and the second data may be sampled from this execution of the task by the planner, e.g., extracted from sensor data of sensors perceiving the scene. The post-conditions following each step may be obtained from the planner and can be expressed in natural language.

The method 900 may further comprise generating the second data by generating a textual description of the modified scene from the execution of the action within the modified scene. For instance, the second data may be the natural language expression of the post conditions corresponding to the ground truth. Alternatively, the second data may be generated by generating a textual description of a difference between the modified scene and the scene using the first data and the sensor data from the execution of the action within the modified scene.

The method 900 may further comprise triggering an execution of the action by the robot within the scene and obtaining the first data from the execution of the action within the scene, i.e., the first data may be obtained from sensor data of (e.g., optical) sensors perceiving the scene.

Further details and features of the method 900 are explained above with reference to the apparatus 600.

In the following, some examples of the proposed concept are presented:
An example (e.g., example 1) relates to an apparatus (100) for an at least partially autonomous robot, comprising processing circuitry (120) configured to obtain first data indicative of a step of an action to be performed by the robot within a sce-ne, obtain second data indicative of a modification of the scene, and generate, by a trained generative model (140), based on the first data and the second data, third data indicative of a previous or next step of the action within the modified scene.

Another example (e.g., example 2) relates to a previous example (e.g., example 1) or to any other example, further comprising that the processing circuitry (120) is configured to generate at least one first embedding based on the first data and at least one second embed-ding based on the second data, and generate a context vector based on the first embedding and the second embedding.

Another example (e.g., example 3) relates to a previous example (e.g., example 2) or to any other example, further comprising that the processing circuitry (120) is configured to transform the second embedding based on a multilayer perceptron, and generate the context vector based on the transformed second embedding.

Another example (e.g., example 4) relates to a previous example (e.g., one of the examples 2 or 3) or to any other example, further comprising that the processing circuitry (120) is configured to generate the context vector by concatenation of the first embedding with the second embedding or data derived thereof.

Another example (e.g., example 5) relates to a previous example (e.g., one of the examples 2 to 4) or to any other example, further comprising that the processing circuitry (120) is configured to generate the context vector by extracting at least one embedding from a database having a small distance from the second embedding among all predefined embeddings of the database, and concatenating the first embedding with the extracted embedding.

Another example (e.g., example 6) relates to a previous example (e.g., one of the examples 2 to 5) or to any other example, further comprising that the processing circuitry (120) is configured to generate the first embedding and the second embedding in parallel.

Another example (e.g., example 7) relates to a previous example (e.g., one of the examples 2 to 6) or to any other example, further comprising that the trained generative model (140) comprises a trained perceiver model configured to generate the first and/or second embedding.

Another example (e.g., example 8) relates to a previous example (e.g., one of the examples 2 to 7) or to any other example, further comprising that the processing circuitry (120) is configured to generate the first embedding using a codebook.

Another example (e.g., example 9) relates to a previous example (e.g., one of the examples 1 to 8) or to any other example, further comprising that the trained generative model (140) comprises a trained continuous normalizing flow configured to generate the third data based on the context vector.

Another example (e.g., example 10) relates to a previous example (e.g., one of the examples 1 to 9) or to any other example, further comprising that the first data is image data indicative of an image representing the scene in which the step of the action is shown.

Another example (e.g., example 11) relates to a previous example (e.g., one of the examples 1 to 10) or to any other example, further comprising that the second data is text data indicative of a textual description of the modification.

Another example (e.g., example 12) relates to a previous example (e.g., one of the examples 1 to 11) or to any other example, further comprising that the processing circuitry (120) is configured to generate, based on the third data, image data indicative of an im-age representing the modified scene in which the previous or next step of the action is shown.

Another example (e.g., example 13) relates to a previous example (e.g., one of the examples 1 to 12) or to any other example, further comprising that the third data indicates a tensor of shape.

Another example (e.g., example 14) relates to a previous example (e.g., one of the examples 1 to 13) or to any other example, further comprising that the third data indicates a position and/or orientation of the robot or parts thereof in the modified scene.

Another example (e.g., example 15) relates to a previous example (e.g., one of the examples 1 to 14) or to any other example, further comprising that the third data indicates a cost of an execution of the previous or next step by the robot within the modified scene.

An example (e.g., example 16) relates to an apparatus (600) for training a generative model (610), comprising processing circuitry (620) configured to train the generative model (610) based on training data, wherein the training data comprises first data indicative of a step of an action to be performed by an at least partially autonomous robot within a scene, second data indicative of a modification of the scene and corresponding ground truth data indicative of a previous or next step of the action within the modified scene, and wherein the processing circuitry (620) is configured to train the generative model (610) to output third data indicative of an estimation of the previous or next step of the action within the modified scene based on the first data and the second data.

Another example (e.g., example 17) relates to a previous example (e.g., example 16) or to any other example, further comprising that the generative model (610) comprises a perceiver model, and wherein the processing circuitry (620) is configured to train the perceiver model to generate a first embedding based on the first data and/or a second embedding based on the second data.

Another example (e.g., example 18) relates to a previous example (e.g., one of the examples 16 or 17) or to any other example, further comprising that the generative model (610) comprises a continuous normalizing flow, and wherein the processing circuitry (620) is configured to train the continuous normalizing flow to generate the third data based on the first data and the second data.

Another example (e.g., example 19) relates to a previous example (e.g., example 17) or to any other example, further comprising that the processing circuitry (620) is configured to separately train the perceiver model and the continuous normalizing flow.

An example (e.g., example 20) relates to a method (800) for an at least partially autonomous robot, comprising obtaining (810) first data indicative of a step of an action to be performed by the robot with-in a scene, obtaining (820) second data indicative of a modification of the scene, and generating (830), by a trained generative model, based on the first data and the second data, third data indicative of a previous or next step of the action within the modified scene.

An example (e.g., example 21) relates to a method (900) for training a generative model, comprising training (910) the generative model based on training data, wherein the training data comprises first data indicative of a step of an action to be performed by an at least partially autonomous robot within a scene, second data indicative of a modification of the scene and corresponding ground truth data indicative of a previous or next step of the action within the modified scene, and wherein the generative model is trained (920) to output third data indicative of an estimation of the previous or next step of the action within the modified scene based on the first data and the second data.

Another example (e.g., example 22) relates to a previous example (e.g., example 21) or to any other example, further comprising triggering an execution of the action by the robot within the modified scene, and

Another example (e.g., example 23) relates to a previous example (e.g., example 22) or to any other example, further comprising generating the second data by generating a textual description of the modified scene from the execution of the action within the modified scene.

Another example (e.g., example 24) relates to a previous example (e.g., example 22) or to any other example, further comprising generating the second data by generating a textual description of a difference between the modified scene and the scene using the first data.

Another example (e.g., example 25) relates to a previous example (e.g., one of the examples 21 to 24) or to any other example, further comprising triggering an execution of the action by the robot within the scene, and obtaining the first data from the execution of the action within the scene.

Another example (e.g., example 26) relates to a non-transitory, computer-readable medium comprising a program code that, when the program code is executed on a computer, a processor, or a programmable hardware component, performs the method of any one of examples 20 to 25.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) for an at least partially autonomous robot, comprising processing circuitry (120) configured to:
obtain first data indicative of a step of an action to be performed by the robot within a scene;
obtain second data indicative of a modification of the scene; and
generate, by a trained generative model (140), based on the first data and the second data, third data indicative of a previous or next step of the action within the modified scene.

2. The apparatus (100) of claim 1, wherein the processing circuitry (120) is configured to:
generate at least one first embedding based on the first data and at least one second embedding based on the second data; and
generate a context vector based on the first embedding and the second embedding.

3. The apparatus (100) of claim 2, wherein the processing circuitry (120) is configured to:
transform the second embedding based on a multilayer perceptron; and
generate the context vector based on the transformed second embedding.

4. The apparatus (100) of any one of claims 2 or 3, wherein the processing circuitry (120) is configured to generate the context vector by concatenation of the first embedding with the second embedding or data derived thereof.

5. The apparatus (100) of any one of claims 2 to 4, wherein the processing circuitry (120) is configured to generate the context vector by:
extracting at least one embedding from a database having a small distance from the second embedding among all predefined embeddings of the database; and

6. The apparatus (100) of any one of claims 2 to 5, wherein the trained generative model (140) comprises a trained perceiver model configured to generate the first and/or second embedding.

7. The apparatus (100) of any one of claims 2 to 6, wherein the processing circuitry (120) is configured to generate the first embedding using a codebook.

8. The apparatus (100) of any one of the previous claims, wherein the trained generative model (140) comprises a trained continuous normalizing flow configured to generate the third data based on the context vector.

9. The apparatus (100) of any one of the previous claims, wherein the processing circuitry (120) is configured to generate, based on the third data, image data indicative of an image representing the modified scene in which the previous or next step of the action is shown.

10. The apparatus (100) of any one of the previous claims, wherein the third data indicates a tensor of shape.

11. The apparatus (100) of any one of the previous claims, wherein the third data indicates a position and/or orientation of the robot or parts thereof in the modified scene.

12. The apparatus (100) of any one of the previous claims, wherein the third data indicates a cost of an execution of the previous or next step by the robot within the modified scene.

13. An apparatus (600) for training a generative model (610), comprising processing circuitry (620) configured to train the generative model (610) based on training data, wherein the training data comprises first data indicative of a step of an action to be performed by an at least partially autonomous robot within a scene, second data indicative of a modification of the scene and corresponding ground truth data indicative of a previous or next step of the action within the modified scene, and wherein the processing circuitry (620) is configured to train the generative model (610) to output third data indicative of an estimation of the previous or next step of the action within the modified scene based on the first data and the second data.

14. A method (800) for an at least partially autonomous robot, comprising:
obtaining (810) first data indicative of a step of an action to be performed by the robot within a scene;
obtaining (820) second data indicative of a modification of the scene; and
generating (830), by a trained generative model, based on the first data and the second data, third data indicative of a previous or next step of the action within the modified scene.

15. A method (900) for training a generative model, comprising training (910) the generative model based on training data, wherein the training data comprises first data indicative of a step of an action to be performed by an at least partially autonomous robot within a scene, second data indicative of a modification of the scene and corresponding ground truth data indicative of a previous or next step of the action within the modified scene, and wherein the generative model is trained (920) to output third data indicative of an estimation of the previous or next step of the action within the modified scene based on the first data and the second data.
